Europäisches Patentamt

(19) European Patent Office

Office européen des brevets

(11) Numéro de publication : **0 201 475 B1**

(12) **FASCICULE DE BREVET EUROPEEN**

(45) Date de publication du fascicule du brevet :
07.08.91 Bulletin 91/32

(51) Int. Cl.$^5$ : **G01B 11/30**

(21) Numéro de dépôt : **86870063.4**

(22) Date de dépôt : **05.05.86**

(54) **Procédé pour déterminer la planéité d'une bande laminée en mouvement.**

(30) Priorité : **06.05.85 BE 6048087**

(43) Date de publication de la demande :
**12.11.86 Bulletin 86/46**

(45) Mention de la délivrance du brevet :
**07.08.91 Bulletin 91/32**

(84) Etats contractants désignés :
**AT DE FR GB IT LU NL SE**

(56) Documents cités :
**BE-A- 841 930**
**DE-A- 3 124 297**
**DE-A- 3 234 749**
**GB-A- 2 077 912**
**IRON AND STEEL ENGINEER, vol. 60, no. 7,**
**juillet 1983, pages 45-50, Pittsburgh, Pensyl-**
**vania, US; R. PIRLET et al.: "A noncontact**
**system for measuring hot strip flatness"**

(73) Titulaire : **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles (BE)**

(72) Inventeur : **Pirlet, Robert Alfred 32, Avenue des Lauriers B-4920 Embourg (BE)**

(74) Mandataire : **Lacasse, Lucien Emile et al CENTRE DE RECHERCHES METALLURGIQUES Abbaye du Val-Benoît 11, rue Ernest Solvay B-4000 Liège (BE)**

## Description

La présente invention concerne un procédé pour déterminer la planéité d'une bande laminée en mouvement. Elle s'applique en particulier dans le cas d'une bande métallique, notamment en acier, à la sortie d'une cage de laminoir.

On connaît déjà, notamment par le brevet anglais n° 2,077,912, un procédé dans lequel on vise, par triangulation optique, au moyen de faisceaux laser, une pluralité de points de la surface de la bande en mouvement et on détermine des indices de planéité de la bande. En règle générale, on vise ainsi des points appartenant à la fibre centrale et à deux ou quatre fibres latérales, en fonction de la largeur de la bande.

Dans cette méthode connue, les points de visée peuvent être déplacés latéralement de façon à couvrir la largeur de la bande, chaque fois que la largeur des bandes à laminer change. Normalement, une fois que le positionnement de ces points de visée est réalisé pour une bande de largeur déterminée, il ne subit aucune modification au cours du laminage de cette bande ou de plusieurs bandes successives de même largeur nominale.

Un autre système, du même type, est connu par la publication PIRLET R. et al., "A noncontact system for measuring hot strip flatness", Iron and Steel Engineer, vol.60, July 1983, No. 7, pp.45-50. Ce système utilise plusieurs triangulations optiques adaptables en fonction de la largeur de la bande mais fixes pour chaque largeur de bande.

Il est cependant extrêmement fréquent que la bande soit animée au cours du laminage de mouvements transversaux qui amènent sa fibre centrale à s'écarter de la ligne virtuelle décrite sur la bande par le point de visée central fixe. Le même écart affecte bien entendu les autres fibres visées.

Il en résulte un inconvénient sérieux, car les indices de planéité déterminés à partir de ces mesures incorrectes ne sont plus suffisamment représentatifs de la planéité réelle de la bande.

La présente invention a pour objet un procédé permettant de remédier à cet inconvénient en veillant à ce que les points de visée, en particulier le point situé sur la fibre centrale de la bande, accompagnent celle-ci dans ses mouvements latéraux.

Cette invention est basée sur l'utilisation d'une jauge de largeur, couramment employée dans les laminoirs, dans laquelle deux détecteurs déterminent en continu la position des bords et par conséquent la largeur de la bande. De telles jauges servent généralement à contrôler le respect des conditions de largeur imposée à la bande.

Le procédé pour déterminer la planéité d'une bande laminée en mouvement, qui fait l'objet de la présente invention, dans lequel on détermine par au moins une triangulation optique, constituée par un faisceau émis et un faisceau retransmis, le niveau d'une pluralité de points de la surface de la bande par rapport à un plan horizontal de référence et on en déduit des indices de planéité de ladite bande, est essentiellement caractérisé en ce que, dans une section transversale de la bande contenant au moins un des points de ladite pluralité, on détecte la position d'au moins un des bords latéraux de la bande par rapport à un repère fixe prédéterminé, en ce que l'on en déduit la position réelle dudit point par rapport à ce repère fixe et en ce que l'on modifie l'orientation dudit faisceau émis et dudit faisceau retransmis de façon à tenir compte de la position réelle dudit point.

Selon une mise en oeuvre intéressante du procédé de l'invention, la triangulation optique précitée est située dans le plan de ladite section transversale de la bande et ledit point est le point milieu de la bande dans la section transversale considérée.

De façon connue en soi, le plan horizontal de référence peut être constitué par le plan horizontal tangent aux rouleaux du convoyeur de transport de la bande et le repère fixe prédéterminé peut être le plan vertical longitudinal médian de ce convoyeur.

Dans le cadre de l'invention, la variation de l'orientation des faisceaux émis et retransmis peut être assurée soit par un pivotement des dispositifs émetteurs et récepteurs eux-mêmes soit, si ces dispositifs sont fixes, par une rotation de déflecteurs mobiles disposés sur le trajet des faisceaux émis et retransmis.

Toujours selon l'invention, on détermine simultanément la position réelle, par rapport à un repère fixe prédéterminé, d'une pluralité de points de la surface de la bande et on mesure le niveau desdits points par rapport à un plan horizontal de référence.

Ces opérations sont avantageusement effectuées à intervalles de temps réguliers, et de préférence en continu et à grande vitesse.

Il est alors possible, suivant l'invention, de combiner lesdites mesures de niveau avec la distance parcourue par la bande, dont on connaît la vitesse, pour établir une carte topographique, à l'échelle désirée, de la surface de la bande et pour calculer des indices de planéité.

Ce procédé est particulièrement avantageux dans le cas des tôles fortes où chaque triangulation couvre une portion de la largeur de la bande. Il est prévu selon une variante de l'invention de scruter la bande transversalement et de choisir les points de mesure de façon à les placer sur des lignes régulièrement espacées et reflétant le bord de la bande.

Lorsque ce bord est suffisamment rectiligne, la scrutation peut être effectuée dans une portion de bande limitée par des droites sensiblement parallèles à une direction fixe matérialisée par exemple par le bord latéral du convoyeur.

A titre d'exemple destiné à faciliter la compréhension, l'invention va maintenant être expliquée en détail en faisant référence aux dessins annexés, dans lesquels :

la figure 1 illustre la méthode de compensation des mouvements transversaux de la bande ; et

la figure 2 illustre la méthode de scrutation de la surface d'une tôle forte.

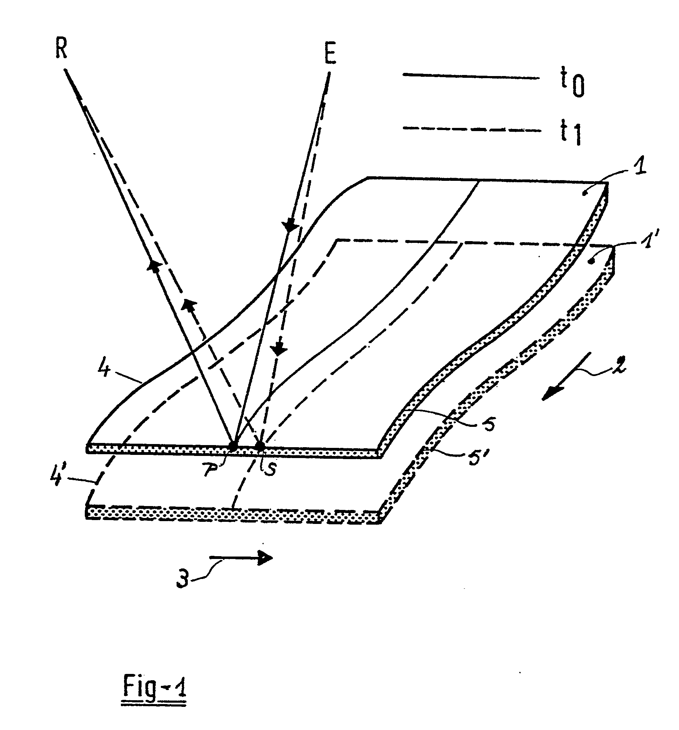

Faisant référence à la figure 1, la bande 1 se déplace dans la direction de laminage indiquée par la flèche 2. Cette bande peut également être sujette à un déplacement transversal indiqué par la flèche 3. Dans le cas qui est illustré dans la figure 1 et qui représente la combinaison de ces deux déplacements, la bande occupe à l'instant $t_o$ la position 1, tracée en trait plein, et à l'instant $t_i$ la position I' tracée en trait interrompu. La position des bords latéraux, respectivement 4,4' et 5,5', de la bande est repérée par une jauge de largeur, non représentée, d'un type équipant habituellement les trains de laminoir à bandes. Cette jauge permet de déterminer la position théorique des bords de la bande et par conséquent d'un point quelconque de la section transversale de cette bande, notamment de son point milieu P.

Pour tenir compte des mouvements transversaux de la bande, on détecte, de préférence en continu, la position réelle des deux bords latéraux de la bande et on en déduit la position réelle du point milieu. A l'instant $t_i$, la bande a progressé—suivant la flèche 2 et, par déplacement transversal, le point milieu de la section de visée occupe la position S. On détermine la valeur de la distance PS représentant le déplacement transversal de la bande à l'instant $t_i$ et on fait varier l'inclinaison des rayons émis EP et réfléchis PR, qui deviennent respectivement ES et SR, de façon à mesurer la position réelle du point visé à cet instant $t_i$.

Il est ainsi possible, grâce au procédé de l'invention, de déterminer les indices de planéité le long de la fibre centrale réelle de la bande. Il va de soi que l'invention s'applique également à la détermination de ces indices de planéité le long d'une fibre longitudinale quelconque de la bande.

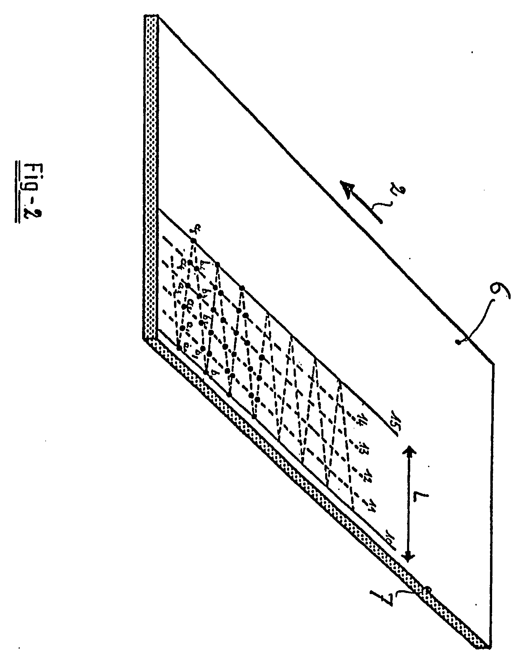

La figure 2 illustre la détermination de la planéité d'une tôle forte 6 se déplaçant dans la direction de laminage indiquée par la flèche 2.

A l'aide d'un système de visée par triangulation, non représenté mais analogue à celui de la figure 1, c'est-à-dire comprenant un émetteur E et un récepteur R, on balaie une portion de tôle de largeur L comprise entre deux lignes 10 et 15 parallèles au bord latéral 7 de la tôle. Entre ces deux lignes extrêmes sont également représentées des lignes 11 à 14 parallèles au bord latéral 7. La position des lignes 10 à 15 par rapport au bord de la tôle est connue. Au cours de la scrutation, le faisceau incident décrit sur la tôle une trajectoire en ligne brisée représentée en trait interrompu, qui coupe les lignes longitudinales 10 à 15 aux points tels que $a_1$, $a_2$... $b_1$, $b_2$... En relevant la position réelle de ces points a, b..., on détermine les indices de planéité de la bande le long des lignes longitudinales 10 à 15 et on établit une carte topographique de cette portion de surface de la tôle.

Le procédé de l'invention permet ainsi, au moyen d'une seule triangulation déformable, de déterminer la planéité d'une portion de surface de grandeur quelconque.

## Revendications

1. Procédé pour déterminer la planéité d'une bande laminée (1 ;6) en mouvement, dans lequel on détermine par au moins une triangulation optique, constituée par un faisceau émis (EP) et un faisceau retransmis (PR), le niveau d'une pluralité de points (P) de la surface de la bande (1 ;6) par rapport à un plan horizontal de référence et on en déduit des indices de planéité de ladite bande (1 ;6), caractérisé en ce que, dans une section transversale de ladite bande contenant au moins un des points (P) de ladite pluralité, on détecte la position d'au moins un des bords latéraux (4,5 ;7) de la bande par rapport à un repère fixe prédéterminé, en ce que l'on en déduit la position réelle (S) dudit point (P) par rapport à ce repère fixe et en ce que l'on modifie l'orientation dudit faisceau émis (ES) et dudit faisceau retransmis (SR) de façon à tenir compte de la position réelle (S) du dit point (P).

2. Procédé suivant la revendication 1, caractérisé en ce que la triangulation optique précitée est située dans le plan de ladite section transversale de la bande et en ce que ledit point est le point milieu de la bande dans la section transversale considérée.

3. Procédé suivant l'une ou l'autre des revendications 1 et 2, caractérisé en ce que l'on détermine simultanément la position réelle, par rapport à un repère fixe prédéterminé, d'une pluralité de points de la surface de la bande et en ce que l'on mesure le niveau desdits points par rapport à un plan horizontal de référence.

4. Procédé suivant la revendication 3, caractérisé en ce que l'on effectue lesdites mesures de niveau à intervalles de temps réguliers et en ce qu'on les combine avec la distance parcourue par la bande pour établir une carte topographique de la surface de la bande et pour calculer des indices de planéité.

5. Procédé suivant l'une ou l'autre des revendications 3 et 4, caractérisé en ce que chaque triangulation optique couvre une portion de la largeur de la bande (6), an ce que l'on scrute au moins une telle portion de bande transversalement au moyen de la triangulation optique correspondante et en ce que l'on choisit les points de mesure de façon à les placer sur des lignes (10-15) régulièrement espacées et reflétant le bord (7) de la bande (6).

## Patentansprüche

1. Verfahren zum Bestimmen der Ebenheit eines sich bewegenden gewalzten Bandes (1 ;6), bei dem durch mindestens eine optische Triangulation mit einem abgegebenen Strahl (EP) und einem rückgesandten Strahl (PR), die Höhe einer Mehrzahl von Punkten (P) auf der Oberfläche des Bandes (1 ;6) bezüglich einer horizontalen Bezugsebene bestimmt wird und daraus Ebenheitsindices jenes Bandes (1 ;6) abgeleitet werden, dadurch gekennzeichnet, daß in einem Querschnitt jenes mindestens einen der Punkte (P) jener Mehrzahl enthaltenden Bandes die Lage mindestens eines der seitlichen Ränder (4,5 ;7) des Bandes bezüglich eines vorherbestimmten festen Orientierungspunktes erfaßt wird, daß daraus die reale Lage (S) jenes Punktes (P) bezüglich jenes festen Orientierungspunktes abgeleitet wird und daß die Ausrichtung jenes abgegebenen Strahls (ES) und jenes rückgesandten Strahls (SR) so geändert wird, daß der realen Lage (S) jenes Punktes (P) Rechnung getragen wird.

2. Verfahren nach Anspruch 1, dadurch gekennzeichnet, daß die vorgenannte optische Triangulation in der Ebene jenes Querschnittes des Bandes durchgeführt wird, und daß es sich bei jenem Punkt um den Mittelpunkt des Bandes in dem betroffenen Querschnitt handelt.

3. Verfahren nach Anspruch 1 oder 2, dadurch gekennzeichnet, daß die reale Lage einer Mehrzahl von Punkten auf der Oberfläche des Bandes bezüglich eines vorherbestimmten festen Orientierungspunktes gleichzeitig bestimmt wird und daß die Höhe jener Punkte bezüglich einer horizontalen Bezugsebene gemessen wird.

4. Verfahren nach Anspruch 3, dadurch gekennzeichnet, daß diese Höhenmessungen in regelmäßigen Zeitabständen durchgeführt werden und daß sie zur Erstellung einer topographischen Karte der Bandoberfläche und zur Berechnung der Ebenheitsindices mit der vom Band zurückgelegten Strecke kombiniert werden.

5. Verfahren nach Anspruch 3 oder 4, dadurch gekennzeichnet, daß jede optische Triangulation einen Breitenabschnitt des Bandes (6) abdeckt, daß mindestens ein solcher Abschnitt des Bandes mittels der entsprechenden optischen Triangulation quer abgetastet wird und daß die Meßpunkte so gewählt werden, daß sie auf gleichmäßig beabstandeten und den Rand (7) des Bandes (6) reflektierenden Linien (10 - 15) liegen.

## Claims

1. Process for determining the flatness of a moving rolled strip (1 ;6), in which the level of a plurality of points (P) of the surface of the strip (1 ;6) in relation to a horizontal reference plane is determined by means of at least one optical triangulation consisting of a transmitted beam (EP) and a retransmitted beam (PR), and flatness indices of the said strip (1 ;6) are deduced therefrom, characterised in that, in a cross-section of the said strip containing at least one of the points (P) of the said plurality, the position of at least one of the lateral edges (4,5 ;7) of the strip in relation to a predetermined fixed reference is detected, in that the actual position (S) of the said point (P) in relation to this fixed reference is deduced therefrom and in that the orientation of the said transmitted beam (ES) and of the said retransmitted beam (SR) is modified so as to take into account the actual position (S) of the said point (P).

2. Process according to Claim 1, characterised in that the abovementioned optical triangulation is located in the plane of the said cross-section of the strip, and in that the said point is the middle point of the strip in the cross-section under consideration.

3. Process according to either of Claims 1 and 2, characterised in that the actual position of a plurality of points of the surface of the strip in relation to a predetermined fixed reference is determined simultaneously, and in that the level of the said points in relation to a horizontal reference plane is measured.

4. Process according to Claim 3, characterised in that the said level measurements are carried out at regular time intervals, and in that they are combined with the distance covered by the strip in order to prepare a topographical map of the surface of the strip and to calculate flatness indices.

5. Process according to either of Claims 3 and 4, characterised in that each optical triangulation covers a portion of the width of the strip (6), in that at least one such strip portion is examined transversely by means of the corresponding optical triangulation, and in that the measurement points are selected so as to place them on uniformly spaced lines (10-15) reflecting the edge (7) of the strip (6).

Fig-1

Fig-2